(19) Europäisches Patentamt
European Patent Office
Office européen des brevets

(11) Publication number: **0 232 737 A2**

(12) **EUROPEAN PATENT APPLICATION**

(21) Application number: 87100426.3

(22) Date of filing: 15.01.87

(51) Int. Cl.4: A01N 59/00 , A01N 59/12

(30) Priority: 16.01.86 US 819443
16.01.86 US 819440
16.01.86 US 819452
23.01.86 US 922375

(43) Date of publication of application: 19.08.87 Bulletin 87/34

(84) Designated Contracting States: DE FR GB IT NL

(71) Applicant: PPG INDUSTRIES, INC.
One PPG Place
Pittsburgh Pennsylvania 15272(US)

(72) Inventor: Chakrabarti, Paritosh Mohan
1361 Redfern Drive
Pittsburgh, Pa. 15241(US)
Inventor: Crawford, Roger Allen
199 Highpoint Drive
Wadsworth Ohio 44281(US)
Inventor: Juda, Robert Henry
2878 Chamberlain Road
Akron Ohio 44313(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

# (54) Halophor composition.

(57) Describes halophor compositions of a complex or an organic carrier, halogen selected from bromine and iodine, and halide represented by the formula MY, wherein M is hydrogen, alkali or alkaline earth metal and Y is iodine or bromine. The organic carrier is a tertiary amide, dihalide of poly(ethylene glycol) or sulfone. The halophor compositions may be adsorbed onto an amorphous siliceous carrier. Also describes bromophor compositions of an amorphous siliceous carrier having adsorbed thereon a bromophor of a complex of bromine, halide represented by the formula MY, and an organic carrier that is a nonionic, anionic or cationic surfactant.

EP 0 232 737 A2

## HALOPHOR COMPOSITION

The present invention relates to iodine-and/or bromine-containing compositions and, more particularly, relates to complexes of bromine and/or iodine with certain organic carriers, e.g., tertiary amides, dihalides, e.g. dichlorides, dibromides or difluorides of poly(ethylene glycols), and sulfones. In a further embodiment, the present invention relates to the use of certain such compositions as fumigants and sanitizers. In a still further embodiment, the present invention relates to solid, free-flowing biocide compositions of particulate amorphous siliceous carrier having said iodine and/or bromine compositions adsorbed thereon, and further relates to solid, free-flowing biocidal compositions of particulate amorphous siliceous carrier having a complex of bromine, halide ion and an organic surfactant-type material.

The halogens, i.e., chlorine, bromine, and iodine, are recognized as excellent biocidal material and are used extensively, particularly in the food processing and handling industries, to prevent bacteriological contamination of foodstuffs. Halogen sanitizers are also used in controlling potentially harmful organisms in potable water, swimming pools, hospitals and wherever harmful organisms can present a contamination problem. Halogen-containing nonionic polyglycol either-type surface active agents have been described as useful for preparing germicidal-detergent compositions.

In order to utilize the sanitizing property of bromine or iodine and to eliminate or minimize many of the difficulties involved with their use, complexes of bromine or iondine with various materials, such as surfactants, have been suggested. These bromine-containing complexes have been referred to as "bromophors". The iodine-containing complexes are referred to as "iodophors". Surfactants used to prepare such halophors have been selected from a wide variety of materials that include anionic, nonionic and cationic materials. See, for example, British patent specification 1,357,365. The aforesaid patent specification further describes granular bromophor compositions in which the bromophor is sorbed onto a particulate, water-soluble imcompletely hydrated inorganic salt which forms stable hydrates.

British patent specification 1,237,911 describes disinfectant compositions comprising a mixture of iodine, an ampholytic organo-amino sulfonate, a nonionic surface active agent and a glycol. This composition is described as being adsorbed onto a silica and mixed with animal feed for controlling the growth of microorganisms within animals such as chickens, turkeys, and pigs. The disinfectant compositions described in British patent specification 1,237,911 are not typical iodophors, i.e., materials that liberate iodine and which exhibit the conventional starch-iodine reaction. The described compositions do not lose iodine even from boiling aqueous solutions but nevertheless are described as having disinfectant or anti-microbial activity, e.g., for in vivo applications.

Complexes of iodine with condensates of ethylene oxide and preformed poly(oxypropylene) glycol are disclosed in U.S. Patent 2,759,869. Complexes of iodine monobromide with nonionic or anionic surface active agents are described in U.S. Patent 2,868,686. Similarly, U.S Patent 4,131,556 describes forming a complex of iodine monobromide or the dibromine iodide ion, $[IBr_2]^-$, with nonionic surfactants such as fatty alcohols extended with ethylene oxide or alkylphenols extended with ethylene oxide. British Patent specifications 1,252,774 and 1,355,359 describe complexes of bromine with nonionic surfactants, such as alkyl aryl polyalkyleneoxy alkanol surfactants, polyalkyleneoxy alcohols, polyalkylene oxide block copolymers and polyalkyleneoxy esters of fatty acids.

Complexes of iodine with condensates of ethylene oxide and preformed poly(oxypropylene) glycol are disclosed in U.S. Patent 2,759,869. Complexes of iodine monobromide with nonionic or anionic surface active agents are described forming a complex of iodine monobromide or the dibromine iodide ion, $[IBr_2]^-$, with nonionic surfactants such as fatty alcohols extended with ethylene oxide or alkylphenols extended with ethylene oxide.

Fumigation of grain, fruit, vegetables or other food product commodities stored in bulk with bromine compounds such as methyl bromide, ethylene dibromide, and ethylene chloorbromide is performed by applying the bromine compound to the stored commodity in an enclosure which is as gas tight as possible. Low-boiling bromine-containing fumigants, such as methyl bromide, are piped into the enclosure from cylinders of compressed or liquified gas whereas bromine-containing fumigants boiling at temperatures above ambient are sprayed into the area to be treated, e.g., on top of the stored commodity. Preferably the later type fumigant has a specific gravity greater than air and permeates the stored commodity as it falls to the floor of the enclosure.

The objects of the present invention is to provide halophors and halophor compositions which supply a source of bromine and/or iodine and which can be utilized for biocidal, e.g., sanitizing and disinfecting, applications. In those applications, the halophor is commonly added to the aqueous media used to cleanse the surfaces to be cleaned, e.g. hospital floors and food processing and handling equipment, whereby the

halophor releases halogen which forms hypohalite ion, e.g., hypobromite ion, in the aqueous medium, which hypohalite serves as the biocidal agent. It is a further object to provide bromophor compositions for use as fumigants for grains, vegetables, fruits, seeds and other food products. When used as a fumigant, the halogen, e.g., bromine, or the bromophor vaporizes from the bromophor, thereby permeating the food products and killing the insects with which it comes into contact. It is another object of the present invention to provide halophor and halophor compositions that contain relatively high amounts of available halogen, e.g., bromine, have improved stability over known halophor compositions, and may be easily handled.

The objects of the present invention are obtained by utilizing the halophor compositions of claim 1 and the compositions of particulate amorphous siliceous carrier having the halophor composition adsorbed thereon. The subclaims describe preferred embodiments of the invention.

## GENERAL DESCRIPTION OF THE INVENTION

The biocidal compositions contemplated herein comprise a complex of bromine and/or iodine, preferably bromine, alkali metal or alkaline earth metal halide, e.g., sodium bromide, and certain organic carriers, as hereinafter defined. The halophor (bromophor or iodophor) may be liquid at standard conditions of temperature and pressure and, accordingly may be readily adsorbed by the siliceous carrier. However, herein described halophors that are normally solid may also be used alone or admixed with the siliceous carrier. The aforesaid biocidal compositions may be utilized as germicides, fungicides, insecticides, as a halogenating agent, and for general sanitizing or antiseptic applications. Particularly contemplated herein are halophor, e.g., bromophor, compositions for use as fumigants for fumigation of food commodities and establishments in which food commodities are processed or stored, e.g., enclosures for the storage of grain, or as a soil fumigant for the control of nematodes and root-knot disease.

Halophors contemplated for use herein are prepared by combining (1) the organic carrier, (2) halide ion and (3) elemental bromine or iodine.

Tertiary amides that may be used to prepare halophors contemplated herein can be represented by the following graphic formula:

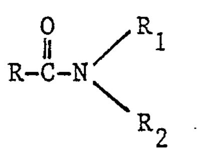 , (I)

wherein R is selected from the group consisting of hydrogen or $C_1$-$C_2$ alkyl, i.e., methyl or ethyl; $R_1$ is a $C_1$-$C_4$ alkyl, i.e., methyl, ethyl, propyl, or butyl; and $R_2$ is selected from the group consisting of $C_1$-$C_4$ alkyl and phenyl.

More particularly, the tertiary amides contemplated are the N,N-disubstituted products of primary amides; namely, formamide, acetamide and propionamide. Examples of such amides are: N,N-dimethyl formamide, N,N-diethyl formamide, N,N-dimethyl acetamide, N,N-diethyl acetamide, N,N-dipropyl acetamide, N-butyl-N-phenyl acetamide, N,N-dimethyl propionamide, and N,N-diethyl propionamide.

The tertiary amides used herein are preferably normally liquid at standard conditions of temperature and pressure; however, those which are solid at room temperature, e.g., about 20°C., but which have melting points of less than about 100°C. may also be used. Normally solid tertiary amides may be heated to convert them to the liquid state to prepare the halophor complex contemplated herein. The tertiary amides described hereinabove are commercially available or can be readily prepared by one skilled in the art. Typically, the tertiary amides contemplated herein may be prepared by heating the corresponding primary amide, i.e., formamide, acetamide, or propionamide, with the corresponding secondary amine, e.g., dimethyl amine.

Dihalides of poly(ethylene glycol) that may be used as the organic carrier are of widely varying molecular weight. For example, molecular weights up to about 5 million have been reported for the precursor poly(ethylene glycol). In general, the poly(ethylene glycol) dihalide can be represented by the following graphic formula:

$X(CH_2CH_2O)_nX$ (II)

wherein X is halogen, i.e., chlorine, bromine or fluorine, and n is typically a number of at least 4. The average number of ethylene oxide units, i.e., "n", may vary widely, e.g., from about 4 to about 100,000, the latter corresponding to an average molecular weight of about 5 million (basis the poly(ethylene glycol)

precursor). In a preferred embodiment, the poly(ethylene glycol) dihalide is a liquid. In a particular embodiment, n is a number of from about 4 to about 20, e.g., from about 8 to about 15. The halide is typically an alkali metal iodide or bromide, or alkaline earth metal chloride, bromide or iodide. The poly-(ethylene glycol) dihalide corresponding to graphic formula II should have the capacity to complex with elemental bromine and/or iodine and to carry the aforesaid complexed halogen into aqueous solution without precipitation or crystallization.

The organic carrier represented by graphic formula II may be prepared by converting the corresponding poly(ethylene glycol) precursor to its corresponding dihalide, e.g., the dichloride, $Cl(CH_2CH_2O)_nCl$. Poly-(ethylene glycols) are well-known commercial compounds. A series of these water-soluble polymers having molecular weights up to several million are offered by the Union Carbide Company under the POLYOX® trademark. The poly(ethylene glycol) resins may be represented by the graphic formula, $HO(CH_2CH_2O)_nH$, wherein n is typically at least 4, i.e., an average molecular weight of about 200. The average molecular weight of the resin can vary widely and a broad molecular weight range of such resins is available commercially. For example, POLYOX resins wherein n is a number from about 2000 to 100,000 - (corresponding to molecular weights of from about 100,000 to 5 million) have been advertised. The average number of ethylene oxide units in the resin may, therefore vary from, for example, 4 to 100,000 - corresponding to average molecular weights between 200 and 5 million. Resins in which the average number of ethylene oxide units vary from about 4 to about 450, e.g., about 4 to about 150, more particularly, 4 to 100 or 4 to 50, are contemplated for use in the preparation of the dihalides used to form the halophor complex described herein. Also contemplated particularly are resins wherein the average number of ethylene oxide units range from about 450 to 2000.

In particular, those polymers having a molecular weight of less than 700, and which are liquid at room temperature (23°C.), are deemed particularly useful for ease in processing. More particularly, such polymers may have average molecular weights of about 200, 300, 400 or 600. Resins having average molecular weights of from 1000 to 20,000 are white waxy solids at room temperature. These resins have liquidus temperatures ranging from about 35°C. to about 65°C. Resins with average molecular weight of 1000, 1540, 2000, 4000, 6000, 9000 and 20,000 have been described, i.e., resins wherein the average number of ethylene oxide units range from about 20 to about 450. Poly(ethylene glycol) resins that are not liquid at room temperature, may be dissolved in a suitable inert organic solvent (as described herein) for conversion to the corresponding dihalide with subsequent removal of the solvent.

The precursor polymers may be prepared by polymerizing ethylene glycol in the presence of Lewis acids or Lewis bases, e.g., sodium hydroxide. The polymerization is generally carried out under pressure, usually 20 to 50 pounds per square inch (137kPa-344kPa), in order to shorten the reaction time. Polymerization temperatures employed are in the range of from about 120°C.-200°C. when basic catalysts are used or from about 50°C.-70°C. when Lewis acids are used. The molecular weight may be controlled by the choice of catalyst and catalyst concentration.

The designation of the number of alkyleneoxy units present per mole of the aforedescribed polymer molecule, i.e., the letter "n", designates the average number of moles of alkylene oxide present per mole of organic polymer, i.e., the poly(ethylene glycol) or poly(ethylene glycol) dihalide, and hence the value of "n" in graphic formula I or the formula for the poly(ethylene glycol) resins may be a fractional number. Even though "n" is denoted as an integer, each polymeric molecule contains a distribution of units with the "n" value representing the average number of moles of alkylene oxide per mole of polymer.

Conversion of the poly(ethylene glycol) polymer to the corresponding dichloride or dibromide may be readily accomplished by reaction of the polymer with thionyl chloride or phosphorus trichloride, or phosphorous tribromide respectively by means well known in the art. Additionally, the polymer can be converted to the corresponding bis chloroformate, bisbromoformate or bisfluoroformate by reaction with phosgene, bromophosgene (carbonyl bromide) or carbonyl difluoride respectively. The resulting bischloroformate, bisbromoformate or bisfluoroformate may be converted to the corresponding dichloride, dibromide or difluoride by heating it in the presence of a catalytic amount of solid poly(vinyl pyridine), e.g., poly(4-vinyl pyridine), catalyst at between about 100°C. and 175°C. for from about 0.5 to about 10 hours. A suitable poly(vinyl pyridine) catalyst is a cross-linked poly(4-vinyl pyridine) available commercially from Reilly Tar and Chemical Corporation. Usually, from about 1 to 20 weight percent of the poly(vinyl pyridine) catalyst, basis the haloformate, is used. Preferably, the catalyst is substantially free from water, thereby avoiding the formation of hydrogen halide, e.g., hydrogen chloride, vapors during conversion of the haloformate to the dihalide.

Sulfones that may be employed in preparing the halophors of the present invention include the acyclic sulfones, e.g., dimethyl sulfone, and heterocyclic sulfolanes, e.g., tetrahydrothiophene 1,1-dioxide - (sulfolane) -both of which will be referred to collectively as sulfones.

The acyclic sulfones may be represented by the graphic formula $R_1$-$SO_2$-$R_2$, wherein $R_1$ is a $C_1$-$C_4$ alkyl group, e.g., methyl, ethyl, propyl and butyl, and $R_2$ is a $C_1$-$C_4$ alkyl or phenyl group. Typically, $R_1$ and $R_2$ are the same but may be different. Examples of acyclic sulfones include: dimethyl sulfone, diethyl sulfone, di-n-propyl sulfone, dibutyl sulfone, methyl ethyl sulfone and methyl phenyl sulfone. Dimethyl sulfone is economically preferred. Acyclic sulfones may be prepared by the oxidation of the corresponding sulfide or sulfoxide at elevated temperatures with an excess of hydrogen peroxide in glacial acetic acid, or with chromic or nitric acid. An alkyl phenyl sulfone may be prepared by reaction of an alkane sulfonic acid with benzene under dehydrating conditions.

The heterocyclic sulfones, e.g., sulfolanes, may be represented by the graphic formula:

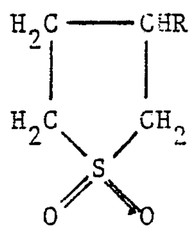

(III)

wherein R is hydrogen or a lower alkyl, e.g., $C_1$-$C_4$ alkyl. Sulfolane (tetrahydrothiophene 1,1-dioxide or tetramethylene sulfone) is commercially available organic solvent. It may be prepared by the addition of sulfur dioxide to 1,3-butadiene at ordinary temperatures, e.g., 25°C. to produce sulfolene, which may be hydrogenated over nickel catalyst to sulfolane. 3-alkyl substituted sulfolanes may be prepared by a corresponding reaction utilizing a 2-alkyl substituted butadiene, e.g., isoprene. In addition to sulfolane, other heterocyclic sulfones that may be used include 3-methyl sulfolane, 3-ethyl sulfolane, 3-n-propyl sulfolane and 3-n-butyl sulfolane.

Organic surfactant-type carriers used to prepare bromophors of the present invention may vary and will depend upon the intended use of the bromophor, the properties of the bromophor desired, such as viscosity, miscibility, toxicity, cost, etc. Generally, to be useful, the organic carrier must form a complex with elemental bromine and be miscible with and preferably capable of at least partially dissolving (more preferably totally dissolving) the metal halide, e.g., sodium bromide, lithium bromide or potassium bromide (or their corresponding iodides or chlorides), or the bromides, chlorides and iodides of calcium and magnesium. The complex formed should liberate bromine under conditions of use in amounts sufficient to kill the biotic form; e.g., algae, bacteria, fungi, insect, etc., exposed to the complex.

Many different types of organic carriers that form complexes with bromine have been disclosed. Principally, those organic carriers which are capable of developing intermolecular attractive forces between the bromine and an atom in the organic carrier are preferred. Of particular note are those organic carriers containing oxygen atoms that form intermolecular interactions with bromine thereby binding the bromine to the organic carrier. Such intermolecular attractive forces develop when two atoms of bromine become positioned next to atoms, e.g., oxygen atoms, in the organic carrier having the correct orientation and spacing. A discussion of intermolecular interactions is found in the article, "Structural Chemistry of Donor-Acceptor Interactions", by Henry A. Bent, Chemical Review, Vol. 68, pages 587-648 (1968).

Organic carriers that have received particular attention for use in the preparation of bromophors are surfactant-type materials, i.e., nonionic, anionic, and cationic compounds. Such materials are described in British patent specification 1,357,365, the disclosure of which is incorporated herein by reference. As indicated, any of such organic compounds or materials, which are capable of developing intermolecular attractive forces with bromine, thereby forming a complex between the organic carrier and bromine atoms, may be used and are contemplated for use herein as an organic carrier. The organic carrier should also be capable of carrying the complexed bromine into aqueous solution without ist precipitation or crystallization therein. Mixtures of organic carriers described herein may also be used.

Particular classes of nonionic surfactants which may complex bromine to form bromophors are:

1. Polyalkyleneoxy alkyl phenols,
2. Polyalkyleneoxy alcohols, and
3. Polyalkyleneoxy esters of fatty acids.

The polyalkyleneoxy alkyl phenols may be represented by the formula:

$R_1—Ø—O—(R'O)_nH$

wherein $R_1$ is an alkyl group containing from 5 to 30, more particularly 8 to 18, carbon atoms, e.g., octyl and nonyl, Ø is phenylene, n is any number from about 1 to 100 and R'O is either ethylene oxide or a mixture of ethylene oxide with other alkylene oxides having from 3 to 4 carbon atoms such that the oxygen/carbon ratio in the $(R'O)_n$ hydrophilic group exceeds 0.4.

Some polyethyleneoxy alkyl phenol surfactants which may be utilized are:

1. t-octyl phenoxy polyethyleneoxy ethanol having the formula:

$C_8H_{17}ØO(CH_2CH_2O)_aH$

in which Ø is phenylene and a is a number from 1 to 40.

2. Dodecyl phenoxy polyethyleneoxy ethanol having the formula:

$C_{12}H_{25}ØO(CH_2CH_2O)_bH$

in which Ø is phenylene and b is a number from 10 to 18.

3. Branched chain nonyl phenoxy polyethyleneoxy ethanol having the formula:

$C_9H_{19}ØO(CH_2CH_2O)_cH$

in which Ø is phenylene and c is a number from 1 to 100.

4. Straight chain (linear) nonyl phenoxy polyethyleneoxy ethanol having the formula:

$CH_3(CH_2)_8ØO(CH_2CH_2O)_dH$

in which Ø is phenylene and d is a number from 1 to 15.

The polyalkyleneoxy alcohols may be represented by the formula:

$R_2O(R'O)_eH$

wherein $R_2$ is an alkyl group having from 6 to 32, preferably 8 to 22, e.g., 10 to 18, carbon atoms, a phenyl group or phenyl substituted with 1, 2 or 3 alkyl groups, which alkyl groups have a total of from 6 to 36 carbon atoms, e is any number from 2 to 50, e.g., 2 to 12, and R'O is as defined above.

One group of such surfactants are the alkyl polyethyleneoxy ethanols, more particularly, the linear primary alcohol polyethyleneoxy ethanols. This group of compounds may be represented by the formula:

$CH_3—(CH_2)_m—CH_2—O—(CH_2CH_2O)_eH$

wherein m is any number from 9 to 13 and e is any number from 2 to 50.

A second group of alkyl polyethyleneoxy ethanols are the secondary alcohol polyethyleneoxy ethanols. This group can be represented by the formula:

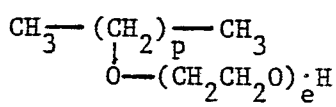

wherein p is any number from 8 to 16 and e is any number from 2 to 50.

The polyethyleneoxy esters of fatty acids can be represented by the formula:

$R_5COO(R'O)_a H$

wherein $R_5$ is an alkyl group having from 7 to 23 carbon atoms, R'O is as defined above and a is a number from 1 to 40. Particularly useful are those esters wherein $R_5$ is an alkyl group containing 10 to 18 carbon atoms, R' is ethylene and a ranges from 5 to 40.

Another group of nonionic carriers that may be used to prepare bromophors are monohalides of polyethoxylated phenols and polyethoxylated aliphatic alcohols represented by the following general formula, $R_6(OCH_2CH_3)_e$ X, wherein $R_6$ is an alkyl group containing 8 to 22 carbon atoms, a phenyl group or phenyl group substituted in the ring with 1, 2 or 3 alkyl groups, which alkyl groups contain from 6 to 36 carbon atoms, and e is any number from 2 to 50. See, for example, U.S. Patent 3,277,010.

Cationic surfactants that may be used to prepare bromophors may be represented by the following graphic formula:

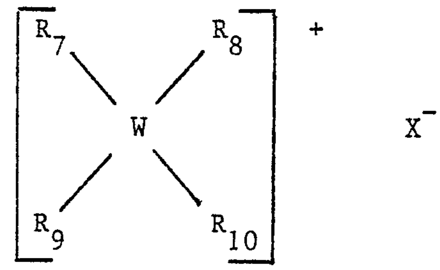

wherein at least one of the radicals $R_7$, $R_8$, $R_9$ and $R_{10}$ is a hydrophobic aliphatic or araliphatic radical from 1 to 28 carbon atoms, W is nitrogen or phosporous and X is a salt-forming anionic radical, e.g., the chloride, bromide, iodide, sulphate, phosphate or acetate ion. They hydrophobic aliphatic or araliphatic radicals may be long-chain alkyl, short chain alkyl, long-chain alkoxyaryl, long-chain alkylphenoxyalkyl, long-chain alkylaryl, halogen substituted long-chain alkylaryl and alkylaryl groups. By the terms "short chain" or "lower", as used herein, is meant an alkyl group containing up to 7 carbon atoms, and by the term "long chain", as used herein, is meant an alkyl group containing from 8 to 22 carbon atoms. The remaining substituents on W, other than the hydrophobic aliphatic or araliphatic radicals, are hydrocarbon substituents containing a total of no more than 12 carbon atoms. The most suitable quaternary compounds are characterized by a molecular weight above 200.

Typical of the useful cationic surfactants are quaternary ammonium compounds. Quaternary ammonium compounds that may be used are those in which at least one of the radicals $R_7$, $R_8$, $R_9$ and $R_{10}$ attached to the nitrogen atom, W, is a hydrophobic aliphatic or araliphatic radical of preferably from 6 to 28 carbon atoms. The hydrophobic aliphatic or araliphatic radical may be long-chain, as herein defined, alkyl, long-chain alkoxyaryl, long-chain alkylaryl, halogen (chlorine, bromine, or iodine)-substituted long-chain alkylaryl, long-chain alkylphenoxyalkyl or arylalkyl. The term aryl includes phenyl and other aromatic groups. The remaining radicals on the nitrogen atom (other than the hydrophobic aliphatic or araliphatic radicals) are hydrocarbon substituents containing a total of no more than 12 carbon atoms. Such surfactants are disclosed more fully in United States Patent No. 2,679,533. Examples of quaternary ammonium compounds are:

1. Alkyl benzyldimenthylammonium halides.

The alkylbenzyldimenthylammonium halides may be represented by the graphic formula:

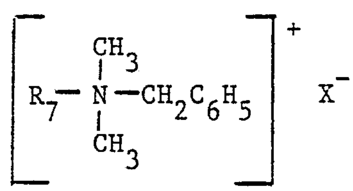

wherein $R_7$ may be an alkyl having from 8 to 18 carbon atoms and the phenyl group is unsubstituted or contains one or more halo substituents, and X is a chloride or bromide ion.

2. Alkyltrimethylammonium halides..

The alkyltrimethylammonium halides may be represented by the graphic formula:

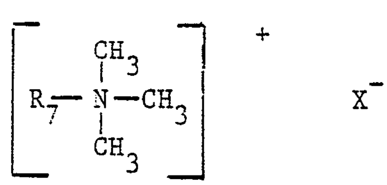

wherein $R_7$ may be an alkyl having from 8 to 18 carbon atoms, and X is a chloride or bromide ion.

Other cationic surfactants, to wit, quaternary phosphonium compounds, which may be used can be represented by the following graphic formula:

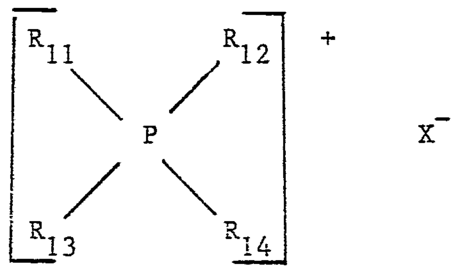

wherein at least one of the radicals $R_{11}$, $R_{12}$, $R_{13}$ and $R_{14}$ attached to the phosphorous atom is a hydrophobic aliphatic or araliphatic radical of from 1 to 28 carbon atoms. The hydrophobic aliphatic or araliphatic radicals may be long-chain, as herein defined, alkyl, long-chain alkoxyaryl, long-chain alkylaryl, halogen substituted long-chain alkylaryl, long-chain alkylphenoxyalkyl, and arylalkyl groups. The remaining substituents (other than the hydrophobic aliphatic or araliphatic radicals) are hydrocarbon substituents having from 1 to 28 carbon atoms. The radical X in the above formula may be any salt-forming anionic radical, as hereinabove described.

Anionic surfactants that may be used to prepare bromophors include the following organic anionic surfactants:

1. Phosphate esters,
2. Sulfonates, and
3. Carboxylates.

The phosphate ester surfactants may be represented by the formula:

$[R_{15}O(CH_2CH_2O)_n]_pPO_4(H)_r$

wherein $R_{15}$ is an alkyl, phenyl, alkylaryl or arylalkyl group containing from about 6 to about 30 carbon atoms, n is a number from 1 to 100, p is a number from 1 to 3, r is a number from 0 to 1 and p + r equals 3.

The sulfonated surfactants may be represented by the formula:

$R_{15}O(CH_2CH_2O)_aSO_3H$

wherein $R_{15}$ and a are as hereinabove defined.

The carboxylate surfactants may be represented by the formula:

$R_{15}O(CH_2CH_2O)_aCOOH$

wherein $R_{15}$ and a are as hereinabove defined.

The halophors may also be prepared in a suitable organic solvent, such as methanol. The solvent should be capable of dispersing and preferably dissolving the metal halide and organic carrier; it should be sufficiently volatile so as to be readily removed, e.g., by distillation, from the halophor; and should be relatively inert, i.e., not react chemically with the organic carrier or halogen used to prepare the halophor.

The halide ion used in the preparation of the bromophor contemplated herein is provided usually by the bromides or iodides of the alkali metals, sodium, lithium and potassium, and the bromides, iodides or chlorides of calcium and magnesium. Prefereably, the aforesaid alkyli metal and alkaline earth metal halide is soluble or at least partially soluble in the organic carrier. Alternatively, anhydrous hydrogen bromide or hydrogen iodide may be used. The halide may be represented by the formula, MY, wherein M is hydrogen, an alkali metal or an alkaline earth metal, and Y is iodine or bromine, e.g., MBr, MCl or MI.

The amount of halide used with the organic carrier can vary. In general, the mole ratio of the halide ion to halogen, e.g., bromide:-bromine ($Br_2$), may vary from 1:1 to 1:12, more usually from 1:1 to 1:3. Preferably, the mole ration is about 1:2. Depending on the halide (bromide, chloride or iodide) ion and halogen (bromine or iodine) used, the halophor (bromophor or iodiphor) may contain one or more of the following halide or interhalide species: $Br_3^-$ and $Br_2$ multiples thereof, e.g., $Br_5^-$, $Br_7^-$, $Br_9^-$ etc; $Br_2I^-$ and $Br_2$ multiples thereof, e.g., $Br_4I^-$, $Br_6I^-$; $BrI_2^-$ and $Br_2$ or $I_2$ multiples thereof, e.g., $Br_3I_2^-$, $Br_5I_2^-$, $BrI_4^-$ and $BrI_6^-$ etc; and $I_3^-$ and $I_2$ multiples thereof, e.g., $I_5^-$, $I_7^-$ etc.; $Br_2Cl^-$ and $Br_2$ multiples thereof; and $I_2Cl^-$ and $I_2$ multiples thereof.

In accordance with the present invention, the added halide, e.g., alkali metal or alkaline earth metal halide is preferably first admixed with or dissolved (at least partially) in the organic carrier and haloden, i.e., bromine and/or iodine, introduced into the mixture or solution. While not wishing to be bound by any theory, it is believed that halogen so introduced reacts with the alkali metal halide to form perhalo species rather than reacting irreversibly with the organic carrier, thereby providing significant quantities of available

halogen, e.g., bromine, in the halophor, i.e., halogen available for biocidal applications. In a preferred embodiment, the organic carrier and halide, e.g., sodium or lithium bromide, are prepared in the substantial absence of free water, i.e., contains not more than about 5 weight percent water, preferably less than 2 weight percent water. Most preferably, the system is substantially anhydrous, which it is believed leads to enhanced stability of the halophor prepared in accordance with the present process.

By substantial absence of water is meant that the reaction mixture contains less than 5 weight percent, preferably less than 2 weight percent, of total water, i.e., either intentionally added water or water present in the reactants. In particular, the bromophor is prepared in the presence of less than 1.0 weight percent total water, more particularly, less than 0.5, and still more particularly less than 0.1, weight percent total water.

As described, it is preferred that the reactants used to prepare the bromophor are substantially free of water, i.e., the organic carrier, metal halide source and bromine are substantially anhydrous. In the event that the aforesaid reactants, most notably the organic carrier and halide source contain significant quantities of water, they may be dried by contact with suitable drying agents, such as anhydrous sodium sulfate. Other conventional techniques for drying the precursor components that comprise the bromophor may also be employed. It is also contemplated that a particulate drying agent, such as anhydrous sodium sulfate, may be incorporated into the bromophor after it is prepared to remove small amounts of free water that may have been contained in the forming components and/or to retain the bromophor substantially free of moisture. It is, however, considered more desirable that the bromophor be prepared in the substantial absence of water rather than to remove water from the composition following its formation.

Halophors described herein can be readily produced by combining the organic carrier added halide, e.g., alkali metal halide, and bromine (and/or iodine) under suitable complexing conditions. For bromophors, it is preferred that liquid bromine be combined with a mixture, e.g., solution, of liquid organic carrier and the added halide. However, if desired, the anhydrous vapor form of the bromine may be employed. The reaction between liquid bromine and the organic carrier-halide liquid mixture is generally highly exothermic and hence the reaction mixture should be vigorously stirred and cooled if necessary as the bromine is added slowly. It is generally advisable to maintain the temperature of the reaction mixture from about 25°C. to about 55°C., more usually between 40°C. and about 50°C., for best results, although temporary temperature excursions outside such range will yield satisfactory results as long as temperatures at which the halogen reacts irreversibly with the organic carrier are avoided for extended periods of time. The reaction between iodine and the organic carrier -added halide liquid mixture is generally less exothermic than when bromine is used; however, the same precautions and temperatures may be used to prepare the iodophors as are used to prepare the bromophors. As described, the halophor is preferably prepared in the substantial absence of water, i.e., either added water or water present in the reactants, for enhanced stability of the halophor. Small amounts of water, e.g., from 1 to 5 weight percent, basis the halophor complex, may be tolerated.

Organic carriers that are not liquids at or near room temperature, e.g., from about 18°C. to about 45°C., may be dissolved in a suitable organic solvent, such as methanol, and the halophor prepared in solution. Subsequently, the solvent is removed from the halophor. Organic solvents that may be used are those which are relatively inert, i.e., do not react chemically with the organic carrier or halogen used to prepare the halophor, capable of dispersing and preferably dissolving the metal halide, and which may be readily separated from the halophor, e.g., by distillation. Organic carriers that have liquidus temperatures in the 25-45°C. range may be heated to convert them to the liquid state for conversion to the halophor.

The amount of halogen, e.g., bromine, complexed with the amide-halide mixture may vary. Usually the amount of available elemental halogen present in the halophor as elemental halogen, e.g., $Br_2$ or $I_2$, will vary from about 10 to about 50, e.g., 25 to 40, weight percent.

By available bromine is meant that amount of bromine in the complex as determined by thiosulfate titration. Unavailable bromine is the bromine which combines irreversibly with the organic carrier and/or metal halide and is, hence, unavailable for sanitizing purposes -it is not released when the bromophor is placed into use as, for example, when it is incorporated into an aqueous medium.

The amount of available bromine present in a bromophor will depend primarily on the organic carrier utilized to form the complex. Some carriers are capable of complexing more bromine than others. Those bromophors which make available the largest amount of complexed bromine for sanitizing purposes are generally considered the most efficient and inexpensive to use. Depending on the organic carrier used, available bromine efficiencies may be in excess of 75 percent. In some instances, bromine efficiency exceeds 85 percent. By bromine efficiency is meant the percentage of available bromine present in the complex initially, i.e., at the time of bromophor preparation, based upon the total amount of elemental bromine used to prepare the bromophor.

In addition, stabilizers, such as acids that are stable under the conditions of use, may be added to the halophor. Some acids that have been suggested for use as stabilizers for halophors, e.g., bromophors, are hydrochloric acid, hydrobromic acid, phosphoric acid, and acetic acid.

The halophor may, in accordance wtih a preferred embodiment of the present invention, be admixed with a siliceous carrier to provide a composition having sufficient halophor to provide at least a biocidal, e.g., insecticidal, amount of the halophor, e.g., bromophor, thereon; or to provide a source of halogen, e.g., bromine, i.e., as halogenating (brominating) agent. A biocidal amount is that amount of halophor that is sufficient to liberate a toxic dosage of elemental bromine and/or iodine, i.e., a dosage sufficient to kill at least 99 percent of the biologic population exposed thereto. Typically, an insecticidal amount is a dosage that results in the killing of at least 99 percent of the biologic population, i.e., the insect population, after their exposure for 24 hours at ambient pressure and a temperature of 25°C. to the halogen(s) liberated from the halophor.

The carrier for the halophor is an inert particulate amorphous siliceous material which is free-flowing and water-insoluble, i.e., has a water solubility at 20°C. of less than 0.5 grams per liter. The siliceous material is chemically inert with respect to the halophor admixed therewith, e.g., the siliceous carrier does not react chemically with the halophor.

The particulate siliceous carrier is of such size as is suitable for the intended use of the herein described halophor composition as a biocidal agent. The particles, for practical purposes, are generally in the range of from 10 to 400 mesh (U.S. Standard Screen), i.e., in the size range of between -10 and +400 mesh, usually -12 or -14, +325 mesh. The siliceous carrier will typically have an oil absorption of between about 75 and 350 milliliters of dibutyl phthalate per 100 grams of silica. Oil absorption values can be obtained using a method like that described in ASTM D2414-65. For most applications, the oil absorption of the siliceous carrier will be between about 150 and 300 milliliters/100 grams.

The siliceous carrier may be a synthetic amorphous silica or naturally occurring silica-or silicate-containing minerals. Exemplary of synthetic amorphous silicas that may be used as the carrier are precipitated silicas, fumed silicas and silica gels, including hydrogels and xerogels. The aforesaid subcategories of synthetic amorphous silicas refer generally to the method of their preparation. Precipitated silicas are prepared by mixing an alkali metal silicate, e.g., sodium silicate, and a mineral acid, e.g., hydrochloric acid, sulfuric acid or carbonic acid, to cause precipitation of very fine silica particles which are washed free of residual alkali metal salts and dried. Precipitated silicas may be prepared by the methods described in U.S. Patent 2,940,830. Fumed or pyrogenic silicas are generally prepared by the flame-hydrolysis of silicon tetrachloride to form a fine silica and by-product hydrochloric acid. Silica gel may be prepared by mixing an alkali metal silicate, e.g., sodium silicate, with a mineral acid at a pH and silica concentration such that a gelatinous precipitate (hydrogel) is formed. The hydrogel can then be washed to remove electrolytes either before or after drying, e.g., spray drying and micronizing. When the hydrogel is dehydrated, a xerogel is formed. This may be accomplished by replacing the hydrogel water prior to the drying step with a readily volatile material, e.g., an alcohol.

Precipitated silica particularly useful as a carrier for the halophor described herein is material having a BET surface area of between about 130 and about 180 square meters per gram, an oil absorption of between 200 and 270, e.g., between about 230 and 260, milliliters of dibutyl phthalate per 100 grams of silica, a water absorption of between about 160 and 180 milliliters per 100 grams of silica, a median agglomerate particle size of between about 6 and 15, preferably between 8 and 12, microns (micrometers), as measured by a Coulter counter, and a specific volume of at least 3.5 cubic centimeters per gram, e.g., 3.5-4.7 $cm^3/g$, when compacted with an applied pressure of 17 pounds per square inch (psi) (117 kPa).

Such particularly useful precipitated silica may be prepared by (a) establishing an alkali metal silicate, e.g., sodium silicate, aqueous solution having an alkali metal oxide concentration of from about 5.6 to 7.2 grams per liter and a temperature of between about 190°F. (88°C.) and 198°F. (92°C), (b) slowly adding from 2 to 5 times the orginal amount of alkali metal silicate to the aqueous solution while simultaneously acidifying the aqueous solution at a rate to maintain the alkali metal oxide concentration therein substantially constant, (c) adding further acidifying agent to the resulting slurry until the pH is from 8 to 9, (d) ageing the slurry at between 188°F. (87°C.) and about 198°F. (92°C.) for from 15 to 90 minutes, (e) adding additional acidifying agent to the aged slurry until the pH is from 4.0 to 4.7 and (f) separating (from the slurry), washing and drying the silica product.

Also contemplated for use as the siliceous carrier are naturally occuring silica-or silicate-containing minerals. These materials are rich in hydrated silicates of aluminum or magnesium and include such clays as montmorillonite, attapulgite, kaolinite, talc, bentonite, and Fuller's earth, diatomaceous earth, naturally occurring amorphous aluminum silicate (zeolites) and the synthetic zeolites which are an amorphous

combination of precipitated alumina and silica. Also contemplated for use as a carrier herein are precipitated calcium silicates, which include synthetic silicas containing small amounts, e.g., 1 to 10 percent, of calcium, calculated as calcium oxide. The above-described synthetic siliceous materials are generally commercially available or can be prepared by techniques known in the art.

The particulate halophor compositions of the present invention can be readily produced by admixing at least one siliceous carrier with the halophor, e.g., liquid bromophor, under conditions designed to obtain a homogeneous mixture. Liquid halophors can be applied to the particulate siliceous carrier by spraying, preferably while the siliceous carrier is stirred or tumbled, to achieve uniform distribution of the halophor on the carrier. Alternatively, the liquid halophor can be poured onto the granular carrier and the mixture thereafter stirred. Halophors that are normally solid or very viscous can be heated slightly to place them in a free-flowing liquid form for making the particulate halophor composition. Generally, it is preferred to maintain the halophor at temperatures of 55°C. or less to prevent irreversible reaction of the halogen, e.g., bromine, with the organic carrier.

The amount of bromophor or iodiphor admixed with the siliceous carrier may vary widely and may be up to that amount which causes the carrier to lose its free-flowing property, i.e., up to the maximum adsorptivity of the siliceous carrier utilized. Hence, the maximum amount of halophor that can be sorbed by the siliceous carrier will be a function of the adsorbtivity of the carrier. A measure of a siliceous carrier's adsorbtivity is its oil absorption. The higher the oil absorption value for a particular siliceous carrier -the greater is the amount of halophor that can be retained by the carrier and still remain free-flowing.

The amount of bromophor or iodophor mixed with or sorbed onto the siliceous carrier is advisedly selected to provide a free-flowing, granular halophor composition containing at least a biocidal amount of available bromine and/or iodine (or bromiodide). Since the amount of iodine or bromine required for biocidal activity will vary with the end use, e.g., fumigant, halogenating agent, santitizer, or disinfectant, the quantity of halophor sorbed onto the carrier may likewise vary and will also depend on the amount of halogen, i.e., bromine and/or iodine present in the halophor available for the particular biocidal application.

It is contemplated that the siliceous carrier, depending on its adsorbtivity, may contain from about 1 to about 80 weight percent of the halophor, basis the weight of the siliceous carrier, e.g., between about 5 and 75 or 10 and 40, weight percent of halophor. For some applications between about 1 and 35 parts by weight of halophor per 100 parts by weight of the siliceous carrier may be sufficient to provide the biocidal, e.g., the insecticidal, amount of available bromine or iodine.

It is contemplated that more than one amorphous, siliceous carrier may be used to prepare the particulate halophor compositions of the present invention. Thus mixtures of siliceous carriers may be used. It is further contemplated that particulate halophor compositions containing high levels of halophor (in the form of a masterbatch) may be prepared with highly absorptive siliceous carrier(s) and subsequently diluted with other chemically inert solid diluents, e.g., less absorptive (and perhaps less costly) siliceous carriers, clays, and inorganic, preferably water soluble salts. Such particulate halophor masterbatch compositions may contain from about 30 to about 80, e.g., 50 to 75, weight percent halophor. Inorganic salts contemplated are alkali metal sulfates, phosphates, (orthophosphates and polyphosphates) carbonates and chlorides. The salts of sodium and potassium are preferred for most applications. Preferably, the salts are used in their anhydrous form.

The compositions contemplated herein may be added to water to produce solutions or dispersions containing a commercially useful and desired concentration of available halogen, e.g., bromine. Solutions containing from about 1.0 to 2000 parts per million of bromine are particularly useful for disinfecting or sanitizing surfaces. For example, they may be used by themselves or in combination with other cleaners and biocides for the cleaning of floors, walls, sinks, bowls, tanks, pasteurizers and pipes. In addition, solutions of bromophors may be applied to paper in the course of its manufacture to control mold and fungi.

The compositions of the present invention are more particularly described in the following Examples which are intended as illustrative only since numerous modifications and variations therein with be apparent to those skilled in the art.

EXAMPLE 1

A reaction flask was charged with 66.8 grams (0.92 mole) of dimethyl formamide and then 33.2 grams (0.38 mole) of lithium bromide was added to the flask over thirty minutes. The temperature of the contents of the flask rose from room temperature (about 18°C.) to 62°C. After the lithium bromide had dissolved in the dimethyl formamide and the temperature of the contents of the flask cooled to 40°C. with an ice bath, 61.3 grams (19.8 milliliters) (0.38 mole) of bromine ($Br_2$) were added slowly with cooling and stirring over

thirty minutes to the flask. Thereafter, the reaction mixture was stirred an additional thirty minutes and allowed to cool to 30°C. The bromophor comprised 41.4 weight percent dimethylformamide, 20.6 weight percent lithium bromide and 38.0 weight percent of added bromine. Of the 38.0 weight percent bromine added to the reaction mixture to form the bromophor, 35.4 weight percent was retained in an available form initially.

20.4 grams of the aforesaid bromophor was mixed slowly over 10-15 minutes with stirring at room temperature (about 18°C.) with 10 grams of free-flowing amorphous, precipitated silica having the following typical physical properties: Surface area -140 to 160 square meters per gram; oil absorption -160-220 milliliters; and pH -6.5 to 7.3. The silica remained free-flowing. The silica-bromophor composition of which 67.1 weight percent was the bromophor, was stored in a glass bottle at 30°C. for 16 weeks, after which the test was terminated. Periodically, a sample of the composition was removed and tested by thiosulfate titration for the amount of available bromine remaining in the sample. Results are tabulated in Table I.

TABLE I

| Time, Wks. | Wt. % Available Bromine | Time, Wks. | Wt % Available Bromine |
|---|---|---|---|
| Start | 22.8* | 6 | 22.6 |
| 3 Days | 22.8 | 7 | 22.8 |
| 1 | 21.5 | 8 | 22.7 |
| 2 | 22.6 | 9 | 22.5 |
| 3 | 23.2 | 10 | 21.6 |
| 4 | 22.8 | 12 | 22.2 |
| 5 | 23.2 | 16 | 22.4 |

* Theoretical amount of available bromine in the silica-bromophor composition is 23.7 weight percent (.671 x 35.4).

The data of Table I show that the composition of Example 1 remains relatively stable over 16 weeks - the amount of available bromine at that time being substantially the same as the amount of bromine available when the composition was made.

Example 2

The bromophor of Example 1 was also stored in a glass bottle at 30°C for 16 weeks and tested periodically for available bromine. Results are tabulated in Table II.

Example 3

The procedure for preparing the bromophor of Example 1 was followed using N,N-dimethylacetamide as the tertiary amide. The amounts (by weight) of the reactants used were the same as in Example 1. The temperature of the contents of the reaction flask rose from room temperature (about 18°C.) to 60°C. during addition of the lithium bromide. About 10% of the lithium bromide did not dissolve in the acetamide. The reaction flask was cooled to 35°C. and the bromine added with cooling over a one hour period. The contents of the flask were then stirred for an additional 3 ½ hours, of which one hour was at 40°C. The resulting bromophor was cooled to 30°C. and tested for available bromine over 16 weeks as described in Example I. Results are tabulated in Table II.

TABLE II

| Time, Wks. | Wt. % Availble Bromine | | Time, Wks. | Wt. % Available Bromine | |
|---|---|---|---|---|---|
| Example No. | 2 | 3 | Example No. | 2 | 3 |
| Start | 35.4 | 36.1 | 8 | 35.2 | 35.6 |
| 3 Days | 35.5 | 36.0 | 9 | 36.3 | 35.8 |
| 1 | 34.9 | 35.0 | 10 | 35.6 | 36.0 |
| 2 | 35.2 | 35.0 | 11 | 36.1 | 36.6 |
| 3 | 35.2 | 35.3 | 12 | 35.6 | 35.6 |
| 4 | 35.2 | 35.4 | 13 | 36.2 | 35.4 |
| 5 | 35.2 | 35.4 | 14 | 35.8 | 33.8 |
| 6 | 35.3 | 35.5 | 15 | 34.6 | 35.4 |
| 7 | 35.2 | 35.6 | 16 | 35.6 | 35.3 |

The data of Table II show that the bromophors of Examples 2 and 3 are relatively stable at 30°C over the 16 week test period.

Example 4

Run A

The procedure of Example 1 was followed using 84.0 grams of N,N-dimethylformamide, 16.0 grams of lithium bromide and 61.3 grams (19.8 ml) of bromine ($Br_2$). The bromine was added with cooling over 20 minutes. The temperature of the contents of the reaction flask ranged from 41-46°C., except for one cooling cycle to 35°C., during addition of the bromine. The contents of the flask were then stirred for 15 minutes.

Run B

The procedure of Run A was followed using N,N-dimethylacetamide.

Each of the bromophors prepared in Runs A and B were tested for available bromine over 16 weeks as described in Example 1. Results are tabulated in Table III.

TABLE III

| Time, Wks. | Wt. % Availble Bromine | | Time, Wks. | Wt. % Available Bromine | |
|---|---|---|---|---|---|
| Run | A | B | Run | A | B |
| Start | 35.1 | 34.5 | 8 | 30.2 | 29.7 |
| 3 Days | 33.8 | 33.4 | 9 | 30.5 | 29.6 |
| 1 | 33.6 | 32.6 | 10 | 30.4 | 29.8 |
| 2 | 31.6 | 31.6 | 11 | 30.0 | 29.7 |
| 3 | 31.7 | 31.2 | 12 | 29.0 | 28.8 |
| 4 | 32.0 | 31.7 | 13 | 30.1 | 29.2 |
| 5 | 31.6 | 31.3 | 14 | 29.5 | 28.5 |
| 6 | 30.6 | 30.6 | 16 | 29.5 | 28.6 |
| 7 | 31.0 | 30.6 | | | |

The data of Table III show that the bromophors of Example 4 are slightly less stable than the bromophors of Examples 2 and 3, the former having about half the amount of lithium bromide than the latter.

Example 5

Run A

The procedure of Example 1 was followed using 81.1 grams of dimethylformamide, 18.9 grams of sodium bromide and 61.3 grams (19.8 ml) of bromine ($Br_2$). The sodium bromide was admixed with the dimethylformamide and the mixture heated from room temperature (about 18°C.) to about 70°C. to enhance dissolution of the sodium bromide. After stirring for 15 minutes at 70°C., the mixture was cooled to 40°C. and the bromide added with cooling over 20 minutes. The reaction mixture temperature varied from 42°C. to 47°C. during addition of the bromine. The reaction mixture was cooled to 30°C. and tested for available bromine by the procedure described in Example 1. Results are tabulated in Table IV.

Run B

The procedure of Run A was followed except that 78.1 grams of dimethylformamide and 21.9 grams of potassium bromide were used. The reaction temperature varied from 42°C. to 45°C. during addition of the bromine. Results of testing are tabulated in Table IV.

Table IV

| Time, Wks. | Wt. % Available Bromine Run A | Run B |
|---|---|---|
| Start | 35.6 | 35.3 |
| 3 Days | 34.6 | 35.2 |
| 1 | 34.9 | 35.2 |
| 2 | 34.2 | 33.9 |
| 4 | 33.4 | 33.4 |
| 6 | 32.7 | 33.4 |

The data of Table IV show that sodium bromide and potassium bromide can be used in place of the lithium bromide of Example 1.

Example 6

20.6 grams of the bromophor prepared in Example 1 were mixed slowly over 10-15 minutes at room temperature (about 18°C.) with 10 grams of free-flowing, amorphous precipitated silica having the following physical properties: Surface area 170 to 210 square meters per gram; oil absorption -210 to 240 milliliters; pH -6.5 to 7.3; and median particle size -25 micrometers. The silica remained free flowing. The silica-bromophor composition, of which 67.3 weight percent was the bromophor, was stored in a glass bottle at 30°C for 16 weeks, after which the test was terminated. Periodically, a sample of the composition was removed and tested by thiosulfate titration for available bromine. Results are tabulated in Table V.

Table V

| Time, Wks. | Wt. % Available Bromine | Time, Wks. | Wt. % Available Bromine |
|---|---|---|---|
| Start | 23.8 | 6 | 23.5 |
| 3 Days | 23.6 | 7 | 23.0 |
| 1 | 22.1 | 8 | 23.0 |
| 2 | 22.7 | 9 | 23.4 |
| 3 | 23.7 | 10 | 23.5 |
| 4 | 23.6 | 12 | 23.3 |
| 5 | 23.8 | 16 | 23.7 |

The data of Table V show that the bromophor composition of Example 6 is relatively stable over the 16 week test period.

Comparative Example 1

Run A

A reaction flask was charged with 100 grams of N,N-dimethylformamide and 61.3 grams (19.8 ml) of bromine ($Br_2$) added thereto with cooling over a 5-10 minute period. The contents of the reaction flask rose from room temperature (about 18°C) to 44°C. during addition of the bromine. The reaction mixture was stirred for 20 minutes until the reaction mixture temperature dropped to 30°C. The resulting bromophor was stored in a glass bottle at 30°C. and analyzed periodically for available bromine. Results are tabulated in Table VI.

Run B

The procedure of Run A was followed except that 100 grams of dimethylacetamide and 63.3 grams of bromine were used. The bromine was added with cooling over 45 minutes during which time the reaction mixture temperature ranged between 40°C and 46°C. The reaction mixture was then stirred for 3½ hours and allowed to cool to 30°C. Results are tabulated in Table VI.

Table VI

| Time, Wks. | Wt. % Available Bromine Run A | Run B |
|---|---|---|
| Start | 23.3 | 16.8 |
| 3 Days | 22.7 | 10.5 |
| 1 | 21.4 | 10.0 |
| 2 | 20.3 | 9.6 |
| 3 | 20.4 | 9.4 |
| 4 | 18.8 | 9.2* |
| 5 | 18.9 | |
| 6 | 18.2* | |

* Test terminated after this reading.

The data of table VI show that the presence of the alkali metal bromide in the bromophor compositions described in Examples 1-6 promotes the retention of available bromine in the described bromophor.

Example 7

Preparation of the Dichloride of Poly(ethylene glycol)

A pool of about 550 milliliters (713 grams -7.20 moles) of liquid phosgene having a temperature of 0°C. was established in a reaction flask. Three moles (1200 grams) of a poly(ethylene glycol) of about 400 molecular weight was added slowly to the phosgene pool over a period of 17-18 hours while maintaining the temperature of the reaction flask contents at 0°C. Excess phosgene was removed from the reaction flask by degassing slowly with nitrogen at room temperature from about 4 days. Thereafter, the reaction mixture was degassed with nitrogen at 50°C. for 2 ½ hours. The acidity (as HCl) of the degassed polyethylene glycol bis chloroformate was found to be 0.21%.

Three hundred grams of the resulting bischloroformate was mixed with 30 grams of granular cross-linked poly(4-vinylpyridine) catalyst and the suspension heated for 5 hours at 130-140°C. The resulting suspension of polyethylene glycol dichloride was filtered and 200 grams of a dark brown liquid recovered. The product assay was found to be 91%.

EXAMPLE 8

A reaction flask was charged with 84.0 grams of the polyethylene glycol dichloride (PEGDC) of Example 7. The PEGDC was heated to 45°C. and 16.0 grams (0.18 mole) of lithium bromide dissolved therein. Following addition of the lithium bromide, 61.3 grams (0.38 mole) (19.8 milliliters) of bromine ($Br_2$) were added slowly with stirring over forty five minutes to the reaction flask. After all of the bromine had been added, the reaction mixture was stirred an additional ten minutes, allowed to cool to 30°C., and stored in a glass bottle at 30°C. for 16 weeks after which the test was terminated. Periodically a sample was

removed from the glass bottle and tested by thiosulfate titration for the amount of available bromine remaining in the stored composition. Results are tabulated in Table VII. The bromophor composition comprised 52.1 weight percent of PEGDC, 9.9 weight percent lithium bromide and 38.0 weight percent of added bromine.

TABLE VII

| Time, Wks. | % Available Bromine | Time, Wks. | % Available Bromine | Time, Wks. | % Available Bromine |
|---|---|---|---|---|---|
| Start | 32.1 | 5 | 31.0 | 11 | 31.5 |
| 3 Days | 32.0 | 6 | 30.5 | 12 | 30.4 |
| 1 | 31.8 | 7 | 32.4 | 13 | 31.1 |
| 2 | 32.0 | 8 | 31.8 | 14 | 30.4 |
| 3 | 32.0 | 9 | 31.4 | 15 | 30.0 |
| 4 | 32.0 | 10 | 31.7 | 16 | 31.5 |

The data of Table VII show that the bromophor composition of Example 8 remained relatively stable over 16 weeks - the amount of available bromine at that time being substantially the same as the amount of bromine available when the composition was made.

Example 9 (Comparative)

A reaction flask was charged with 100 grams of the PEGDC of Example 7. Bromine in the amount of 61.3 grams (0.38 mole) 19.8 milliliters) ($Br_2$) was added with stirring over 5 minutes to the flask. The temperature of the contents in the reaction flask rose from room temperature to 38°C. Thereafter, the temperature increased to 45°C and the flask placed in an ice bath until the temperature decreased to 38°C. After being removed from the ice bath, the temperature rose briefly to 42°C. The reaction flask was allowed to cool to 30°C. and the sample stored at 30°C. in a glass bottle for 7 weeks after which the test was terminated. The bromine added to the bromophor represented 38.0 weight percent of the composition. Of that amount 25.7 weight percent was retained in an available form initially. Periodically, a sample of the bromophor was removed from the glass bottle and tested by thiosulfate titration for the amount of available bromine remaining in the stored composition. Results are tabulated in Table VIII.

TABLE VIII

| Time, Wks. | % Available Bromine | Time, Wks. | % Available Bromine |
|---|---|---|---|
| Start | 25.7 | 4 | 8.7 |
| 3 Days | 17.6 | 5 | 8.4 |
| 1 | 15.4 | 6 | 7.6 |
| 2 | 12.4 | 7 | 7.3 |
| 3 | 10.6 | Test Terminated. | |

EXAMPLE 10

A reaction flask was charged with 84.0 grams (0.7 mole) of sulfolane and 16.0 grams (0.18 mole) of lithium bromide. The mixture was heated to 100°C. with stirring to facilitate dissolution of the lithium bromide in the sulfolane and then cooled to 45°C. Liquid bromine (61.3 grams, 19.8 milliliters, 0.38 mole) was added slowly and with stirring to the mixture in the reaction flask over thirty minutes while maintaining the reaction mixture in the temperature range of 40°C.-45°C. The reaction product comprised 52.1 weight percent sulfolane, 9.9 weight percent lithium bromide and 38.0 weight percent bromine ($Br_2$). The reaction product was cooled to 30°C., transferred to a glass bottle and stored at a constant temperature of 30°C. Periodically, a sample was removed from the bottle and tested by thiosulfate titration for the amount of available bromine remaining in the stored reaction product. Results are tabulated in Table IX.

TABLE IX

| Time, Wks. | Wt. % Available Bromine | Time, Wks. | Wt % Available Bromine |
|---|---|---|---|
| Start | 35.8 | 4 | 34.0 |
| 3 Days | 35.5 | 5 | 33.6 |
| 1 | 35.0 | 6 | 34.8 |
| 2 | 34.6 | 9 | 34.7 |
| 3 | 34.1 | 12 | 34.3 |

EXAMPLE 11

A beaker was charged with 15.0 grams of a free-flowing, amorphous, precipitated silica having the following typical physical properties: Surface Area -260-290 square meters per gram, oil absorption -260-285 milliliters; pH - 6.5-7.3; median particle size -28 micrometers; particle size range -24-34 micrometers. To the beaker was added 30.20 grams of the bromophor of Example 10 and the mixture stirred and mixed thoroughly to obtain a uniform product. Bromine was observed to vaporize from the product while in the beaker. The silica-bromophor mixture was stored in a glass bottle at a constant temperature of 30°C. Periodically, a sample of the composition was removed and tested by thiosulfate titration for the amount of available bromine remaining in the sample. Results are tabulated in Table X.

TABLE X

| Time, Wks. | Wt. % Available Bromine | Time, Wks. | Wt % Available Bromine |
|---|---|---|---|
| Start | 21.5 | 2 | 21.4 |
| 3 Days | 20.7 | 4 | 20.4 |
| 1 | 20.8 | 6 | 19.9 |

The data of Table X show that the composition of Example 2 remains relatively stable over the period tested.

Example 12

A mixture of 1.64 parts of Neodol® 25-9 ethoxylated linear alcohol and 1 part of Neodol® 25-10 ethoxylated linear alcohol was prepared so as to approximate a Neodol® 25-12 ethoxylated linear alcohol having an average of 10 moles of ethylene oxide per mole of alcohol. 138.2 grams of the mixture was placed in a reaction flask and 21.8 grams of lithium bromide added thereto. The contents of the flask were heated to 85°C. to facilitate dissolutin of the lithium bromide in the ethoxylated alcohol and then air cooled to 40°C. 12.9 milliliters (40 grams) of bromide were then added slowly over thirty minutes to the flask. The

temperature of the reaction mixture rose initially to 49°C. The reaction mixture was cooled to 40°C. and bromine addition therto continued with the temperature of the mixture being maintained in the range of 40-46°C. A heating mantle was placed around the reaction flask to keep the reaction mixture warm. After 65 minutes the heat was turned off. The temperature of the reaction mixture had reached 48-49°C. The reaction mixture -a viscous orange liquid -was cooled to 40°C., bottled, and stored at a constant temperature of 30°C. Periodically, a sample was removed and tested by thiosulfate titration for the amount of available bromine remaining in the stored product. Results are tabulated in Table XI.

Example 13

A beaker was charged with 35.0 grams of a free-flowing, amorphous, precipitated silica having the following typical physical properties: BET Surface Area -260-290 square meters per gram; Oil Absorption -260-285 milliliters; pH -6.5-7.3; Median Particle Size -28 micrometers; and Particle Size Range -24-34 micrometers. To the beaker was added 65.0 grams of the product of Example 12. The mixture was blended with a spatula until the mixture appeared uniform. The resulting blend was a free-flowing yellow powder. The powder was stored at a constant temperature of 30°C. Periodically, a sample was removed and tested for available bromine as described in Example 12. Results are tabulated in Table XI.

Example 14

69.1 grams of the synthetic Neodol® 25-10 ethoxylated linear alcohol prepared in Example 12 and 69.4 grams of methoxypolyethylene glycol having a molecular weight of approximately 350 (Carbowax® 350) were charged to a reaction flask and 21.8 grams of lithium bromide added to the mixture. The contents of the flask were heated to 88°C. to facilitate dissolution of the lithium bromide in the organic carrier mixture. The flask contents were cooled to 40°C. and 12.9 milliliters of liquid bromine added slowly over 25 minutes to the flask. The temperature of the reaction mixture was maintained generally in the range of 43-47°C. The reaction product -a viscous orange liquid -was cooled to 25°C., bottled, and stored at a constant temperature of 30°C. Periodically, a sample was removed and tested for available bromine, as described in Example 12. Results are tabulated in Table XI.

Example 15

A beaker was charged with 35.0 grams of the silica powder described in Example 13 and 65.0 grams of the reaction product of Example 14. The mixture was blended with a spatula until the mixture appeared uniform. The resulting blend was a free-flowing yellow powder. The powder was stored at a constant temperature of 30°C. Periodically, a sample was removed and tested for available bromine as described in Example 12. Results are tabulated in Table XI.

Example 16

65.0 grams of methoxypolyethylene glycol having a molecular weight of approximately 350 (Carbowax® 350), 65.0 grams of an anionic organic phosphate ester (Gafac® RE-610), and 25.0 grams of lithium bromide were charged to a reaction flask and mixed. The temperature of the mixture rose from 20°C. to 50°C. The mixture was cooled to 45°C. and 30.6 milliliters (95.0 grams) of bromine added slowly to the mixture over an 80 minute period. The temperature of the reaction mixture was maintained at 50°C. ± 5°C. during bromine addition. The reaction mixture was stirred for 1.5 hours and the reaction product bottled. A portion was stored in a freezer. A portion of the reaction product was stored at a constant temperature of 30°C. and periodically tested as described in Example 12.

Example 17

A beaker was charged with 17.5 grams of the silica powder described in Example 13 and 32.5 grams of the reaction product of Example 16 that had been stored in a freezer. The amount of available bromine in the frozen sample of Example 16 was substantially the same as the originally prepared material. The mixture in the beaker was blended with a spatula until the mixture appeared uniform. The resulting blend was a free-flowing orange powder. The powder was stored at a constant temperature of 30°C. Periodically, a sample was removed and tested for available bromine as described in Example 12. Results are tabulated in Table XI.

TABLE XI

| Time, Wks. | Wt. % Available Bromine | | | | | |
|---|---|---|---|---|---|---|
| Example No. | 12 | 13 | 14 | 15 | 16 | 17 |
| Start | 17.9 | 11.7 | 18.0 | 11.9 | 27.8 | 17.7 |
| 3 days | 17.6 | 11.4 | 18.4 | 11.8 | 28.3 | 16.6 |
| 1 | 17.8 | 11.2 | 17.9 | 11.6 | 28.3 | 17.0 |
| 2 | 17.8 | 10.9 | 17.4 | 11.3 | 25.9 | 16.6 |
| 3 | 17.2 | 10.9 | 17.6 | - * | 25.5 | - * |
| 4 | 17.0 | 10.8 | 17.4 | 11.2 | 24.6 | 16.1 |
| 6 | 16.6 | 10.5 | 17.6 | 11.2 | 24.2 | 15.8 |
| 9 | 16.8 | 10.2 | 17.4 | 11.0 | 23.6 | 16.3 |

* - No reading taken

The data of Table XI show that the silica-bromophor compositions of Example 13, 15 and 17 are relatively stable, vis-a-vis the bromophor compositions of Examples 12, 14 and 16 -the difference in initial available bromine concentrations being a dilution effect of the siliceous carrier.

Although the present invention has been described with reference to specific details of certain embodiments thereof, it is not intended that such detail should be regarded as limitations upon the scope of the invention except as and to the extent that they are included in the accompanying claims.

## Claims

1. In a halophor composition of a complex of an organic carrier and halogen selected from the group consisting of bromine, iodine and mixtures of bromine and iodine, the improvement characterized in that the organic carrier is:

(a) tertiary amide represented by the graphic formula:

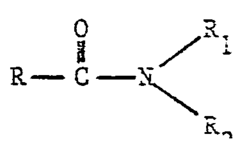

wheren R is selected from the group consisting of hydrogen and $C_1$-$C_2$ alkyl, $R_1$ is a $C_1$-$C_4$ alkyl, and $R_2$ is selected from the group consisting of $C_1$-$C_4$ alkyl and phenyl,

(b) dihalide of poly(ethylene glycol), or

(c) sulfone selected from the group consisting of acyclic sulfones and heterocyclic sulfones, and

the halophor composition contains a halide represented by the formula MY, wherein M is hydrogen, alkali metal or an alkaline earth metal and Y is iodine or bromine, the mole ratio of halide to halogen being from

about 1:1 to 1:12 and the amount of halogen in the complex is between about 10 and about 50 weight percent.

2. The halophor composition of claim 1 wherein the tertiary amide is a formamide or acetamide, the poly(ethylene glycol) dihalide is represented by the graphic formula, $X(CH_2CH_2O)_mX$, wherein X is chlorine, bromine or fluorine and n is a number of from about 4 to 100,000, the acyclic sulfones are represented by the formula $R_1$-$SO_2$-$R_2$, wherein $R_1$ is a $C_1$-$C_4$ alkyl and $R_2$ is a $C_1$-$C_4$ alkyl or phenyl, and the heterocyclic sulfones are represented by the graphic formula:

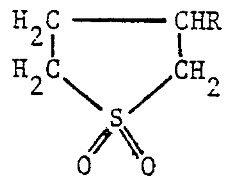

wherein R is hydrogen or $C_1$-$C_4$ alkyl.

3. The halophor composition of claim 2 wherein the sulfone is dimethyl sulfone, diethyl sulfone, sulfolane or 3-methyl sulfolane.

4. The halophor composition of claim 2 wherein the poly(ethylene glycol) dihalide is normally liquid and n is a number of from about 4 to about 20.

5. The halophor composition of claim 2 wherein n is from about 4 to about 450.

6. The halophor composition of claim 2 wherein the mole ratio of halide to halogen is from about 1:1 to 1:3 and the amount of halogen in the complex is from about 5 to 40 weight percent.

7. The halophor composition of claim 6 wherein the halide is an alkali metal bromide selected from sodium bromide, lithium bromide or potassium bromide.

8. In a composition wherein a halophor is adsorbed onto an inert particulate inorganic carrier, the improvement characterized in that from about 1 to about 80 weight percent of the halophor is adsorbed onto an amorphous siliceous carrier, and the halophor composition is a complex of halogen selected from the group consisting of bromine and iodine, halide represented by the formula MY, wherein M is hydrogen, alkali metal or alkaline earth metal, and Y is bromine, chlorine or iodine, and organic carrier selected from:

(a) tertiary amide represented by the graphic formula:

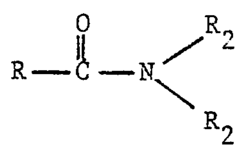

wherein R is selected from the group consisting of hydrogen and $C_1$-$C_2$ alkyl, $R_1$ is a $C_1$-$C_4$ alkyl, and $R_2$ is selected from the group consisting of $C_1$-$C_4$ alkyl and phenyl,

() dihalide of poly(ethylene glycol),

(c) sulfone selected from the group consisting of acyclic sulfones and heterocyclic sulfones, or

(d) nonionic, anionic or cationic surfactant-type material capable of developing intermolecular attractive forces with bromide,

the mole ratio of halide to halogen being from 1:1 to 1:12, the amount of halogen in the complex is between about 10 and about 50 weight percent, and the halogen being bromine when the organic carrier is a nonionic, anionic, or cationic surfactant.

9. The particulate halophor composition of claim 8 wherein the siliceous carrier is a synthetic amorphous silica or naturally occurring silica-or silicate-containing material.

10. The composition of claim 9 wherein the tertiary amide is dimethylformamide, diethylformamide, dimethylacetamide, or diethylacetamide, the poly(ethylene glycol) dihalide is $X(CH_2CH_2O)_nX$, wherein n is a number from 4 to 100,000, and X is chlorine, bromine or fluorine, the sulfone is an acyclic sulfone represented by the formula $R_1$-$SO_2$-$R_2$, wherein $R_1$ is a $C_1$-$C_4$ alkyl and $R_2$ is a $C_1$-$C_4$ alkyl or phenyl, or heterocyclic sulfone represented by the formula:

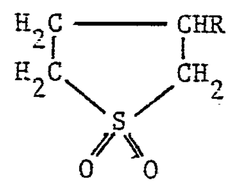

wherein R is hydrogen or $C_1$-$C_4$ alkyl, and the organic surfactant-type material is polyalkyleneoxy alkyl phenols, polyalkyleneoxy alcohols, polyalkyleneoxy esters of fatty acids, monohalides of polyethoxylated phenols, monohalides of polyethoxylated aliphatic alcohols, quaternary ammonium compound, quaternary phosphonium compound, organic phosphate ester, organic sulfonate, or organic carboxylate.

11. The composition of claim 10 wherein the halide is an alkali metal halide selected from the bromides or iodides of sodium, lithium or potassium.

12. The composition of claim 11 wherein the mole ratio of halide to halogen is from about 1:1 to 1:3 and the amount of halogen in the complex is from about 25 to 40 weight percent.

13. A fumigant composition comprising free-flowing, particulate inert amorphous siliceous carrier having adsorbed thereon an insecticidal amount of a bromophor complex of (a) bromine, (b) bromide represented by the formula MBr, wherein M is hydrogen, alkali metal or alkaline earth metal, and organic carrier selected from

(1) tertiary amide of the graphic formula:

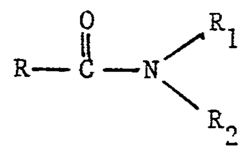

wherein R is hydrogen or $C_1$-$C_2$ alkyl, $R_1$ is $C_1$-$C_4$ alkyl, and $R_2$ is $C_1$-$C_4$ alkyl or phenyl, or

(2) sulfone selected from acyclic sulfone of the formula $R_1$-$SO_2$-$R_2$, wherein $R_1$ is a $C_1$-$C_4$ alkyl and $R_2$ is $C_1$-$C_4$ alkyl or phenyl, and heterocyclic sulfone of the formula:

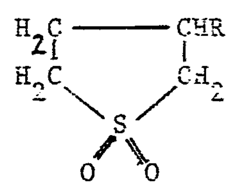

wherein R is hydrogen or $C_1$-$C_4$ alkyl, and

the mole ratio of bromide to bromine being from about 1:1 to 1:12, and the amount of bromine in the complex being between about 10 and about 50 weight percent.

14. The fumigant composition of claim 13 wherein the tertiary amide is dimethylformamide, the sulfone is dimethyl sulfone, diethyl sulfone, sulfolane or 3-methyl sulfolane, and the bromide is an alkali metal bromide selected from sodium bromide, lithium bromide or potassium bromide.

15. The fumigant composition of claim 14 wherein the mole ration of bromide to bromine is from 1:1 to 1:3.

16. The fumigant composition of claim 14 wherein the siliceous carrier is amorphous, precipitated silica.